# EUROPEAN PATENT SPECIFICATION

(11) **EP 4 083 767 B1**
(45) Date of publication and mention of the grant of the patent: **18.11.2026**
(21) Application number: 20905156.4
(22) Date of filing: 18.12.2020
(51) Int. Cl.: G06F 3/0481, G06F 3/04817, G06F 3/0483, G06F 3/0486, G06F 3/04886, G06F 3/04883

(54) **ICON MOVING METHOD AND ELECTRONIC DEVICE**
VERFAHREN ZUR BEWEGUNG VON SYMBOLEN UND ELEKTRONISCHE VORRICHTUNG
PROCÉDÉ DE DÉPLACEMENT D'ICÔNE ET DISPOSITIF ÉLECTRONIQUE

(30) Priority: 24.12.2019 CN 201911345821
(43) Date of publication of application: 02.11.2022
(73) Proprietor: Vivo Mobile Communication Co., Ltd., Dongguan, Guangdong 523863 (CN)
(72) Inventor: GAO, Liyang, Dongguan, Guangdong 523863 (CN)
(74) Representative: Lavoix
(86) International application number: PCT/CN2020/137671
(87) International publication number: WO 2021/129536

(56) References cited:
- CN-A- 102 981 704
- CN-A- 103 500 050
- CN-A- 109 828 705
- CN-A- 109 828 705
- CN-A- 111 142 723
- US-A1- 2011 252 373
- US-A1- 2015 089 410

## Description

### CROSS-REFERENCE TO RELATED APPLICATIONS

This application claims priority to Chinese Patent Application No. 201911345821.8 filed in China on December 24, 2019.

### TECHNICAL FIELD

Embodiments of the present invention relate to the field of communications technologies, and in particular, to an icon moving method and an electronic device.

### BACKGROUND

Generally, when a user is sorting icons of applications (hereinafter referred to as application icons) in a desktop of an electronic device, the user may perform a long-press input for an application icon to make the desktop of the electronic device in icon editing mode (for example, the application icon is in a movable state), and then move the application icon to a page in the desktop.

However, in the foregoing method, when sorting out some application icons in the desktop, the user needs to drag the application icons one by one. Every time the user drags an application icon, the user needs to search for a required page from all pages of the desktop to move the dragged application icon to this page. Therefore, the user performs complicated operations and the operations are time-consuming, so that the electronic device cannot move the application icons efficiently. US2015089410A1 relates to a method and a portable terminal for moving icon.

### SUMMARY

Embodiments of the present invention provide an icon moving method and an electronic device, to resolve a problem that the electronic device cannot move an application icon efficiently.

To resolve the foregoing technical problem, the following technical solutions are used in the embodiments of the present invention. The scope of the present invention is determined only by the scope of the appended claims. More precisely, in one aspect, the present invention provides an icon moving method according to claim 1 and further detailed in the dependent claims referring back to this claim. A corresponding electronic device is provided in claim 7 and further detailed in the dependent claims referring back to this claim. A corresponding computer-readable storage medium is provided in claim 13.

According to a first aspect, an embodiment of the present invention provides an icon moving method applied to an electronic device. The icon moving method includes: receiving a first input; displaying N page windows in response to the first input, where each page window is configured to indicate a page in the electronic device, and N is greater than or equal to 2 and is an integer; receiving a second input, where the second input is an input for a first page window and a second page window of the N page windows; and moving an icon in a target page window in response to the second input, where the target page window includes at least one of the following: the first page window and the second page window.

According to a second aspect, an embodiment of the present invention provides an electronic device, where the electronic device includes: a receiving module, a display module, and a moving module. The receiving module is configured to receive a first input. The display module is configured to display N page windows in response to the first input received by the receiving module, where each page window is configured to indicate a page in the electronic device, and N is greater than or equal to 2 and is an integer. The receiving module is further configured to receive a second input, where the second input is an input for a first page window and a second page window of the N page windows. The moving module is configured to move an icon in a target page window in response to the second input received by the receiving module, where the target page window includes at least one of the following: the first page window and the second page window.

According to a third aspect, an embodiment of the present invention provides an electronic device, where the electronic device includes a processor, a memory, and a computer program that is stored in the memory and that can be run on the processor, and when the computer program is executed by the processor, the steps of the icon moving method according to the first aspect are implemented.

According to a fourth aspect, an embodiment of the present invention provides a computer readable storage medium, where the computer readable storage medium stores a computer program, and when the computer program is executed by a processor, the steps of the icon moving method according to the first aspect are implemented.

In the embodiments of the present invention, the electronic device can display N page windows (each page window is configured to indicate a page in the electronic device) according to the first input, and move the icon in the target page window according to the second input for the first page window and the second page window in the N page windows. Because the user can enable the electronic device to display a plurality of page windows through the first input, the user can directly perform the second input for a page window of the plurality of page windows, so that the electronic device can move an icon in a corresponding page window rapidly, without the need for the user to search for a required page one by one from all pages of the desktop. Therefore, a user's operation can be simplified and time can be saved, so that the electronic device can move an icon in the desktop more efficiently.

### BRIEF DESCRIPTION OF DRAWINGS

FIG. 1 is a schematic architectural diagram of an Android operating system according to an embodiment of the present invention;
FIG. 2 is a first schematic flowchart of an icon moving method according to an embodiment of the present invention;
FIG. 3 is a first schematic diagram of an example of a mobile phone's interface according to an embodiment of the present invention;
FIG. 4 is a second schematic diagram of an example of the mobile phone's interface according to an embodiment of the present invention;
FIG. 5 is a second schematic flowchart of an icon moving method according to an embodiment of the present invention;
FIG. 6 is a third schematic diagram of an example of a mobile phone's interface according to an embodiment of the present invention;
FIG. 7 is a fourth schematic diagram of an example of the mobile phone's interface according to an embodiment of the present invention;
FIG. 8 is a fifth schematic diagram of an example of the mobile phone's interface according to an embodiment of the present invention;
FIG. 9 is a third schematic flowchart of an icon moving method according to an embodiment of the present invention;
FIG. 10 is a sixth schematic diagram of an example of the mobile phone's interface according to an embodiment of the present invention;
FIG. 11 is a seventh schematic diagram of an example of the mobile phone's interface according to an embodiment of the present invention;
FIG. 12 is a first schematic structural diagram of an electronic device according to an embodiment of the present invention;
FIG. 13 is a second schematic structural diagram of an electronic device according to an embodiment of the present invention;
FIG. 14 is a third schematic structural diagram of an electronic device according to an embodiment of the present invention;
FIG. 15 is a fourth schematic structural diagram of an electronic device according to an embodiment of the present invention;
FIG. 16 is a fifth schematic structural diagram of an electronic device according to an embodiment of the present invention; and
FIG. 17 is a schematic diagram of hardware of an electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention.

In the specification and claims of the embodiments of the present invention, the terms such as "first" and "second" are used to distinguish between different objects, but are not used to describe a particular sequence of the objects. For example, the first input and the second input are used to distinguish between different inputs, instead of describing a specific order of inputs.

In the description of the embodiments of the present invention, unless otherwise specified, the meaning of "a plurality of" means two or more. For example, a plurality of elements refers to two elements or more than two elements.

The term "and/or" in this specification describes an association relationship of associated objects, indicating that three relationships may exist. For example, a display panel and/or a backlight may indicate three cases: only the display panel exists, both the display panel and the backlight exist, and only the backlight exists. A character "/" in this specification indicates an "or" relationship between associated objects. For example, input/output indicates input or output.

In the embodiments of the present invention, the term such as "exemplary" or "for example" is used to represent an example, an instance, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

Embodiments of the present invention provide an icon moving method and an electronic device. Because a user can enable the electronic device to display a plurality of page windows through a first input, the user can directly perform a second input for a page window of the plurality of page windows, so that the electronic device can move an icon in a corresponding page window rapidly, without the need for the user to search for a required page one by one from all pages of the desktop. Therefore, a user's operation can be simplified and time can be saved, so that the electronic device can move an icon in the desktop more efficiently.

The icon moving method and the electronic device provided according to the embodiments of the present invention may be applied to a process of moving an icon in the desktop of the electronic device. Specifically, the icon moving method and the electronic device may be applied to a process of moving an application icon and/or a folder icon in each page on the desktop of the electronic device.

The electronic device in the embodiments of the present invention may be an electronic device having an operating system. The operating system may be an Android (Android) operating system, an iOS operating system, or another possible operating system. This is not specifically limited in the embodiments of the present invention.

The following uses the Android operating system as an example to introduce a software environment applicable to the icon moving method according to the embodiments of the present invention.

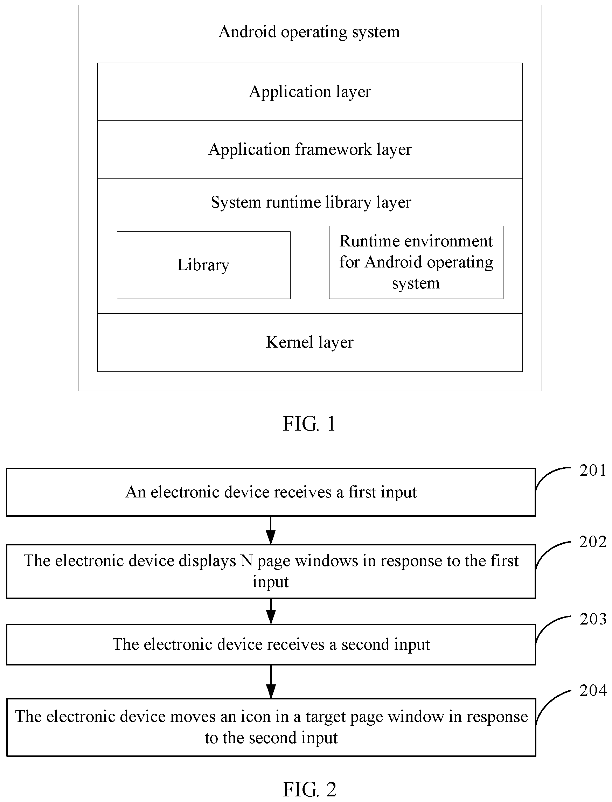

As shown in FIG. 1, it is a schematic diagram of a possible architecture of an Android operating system according to an embodiment of the present invention. In FIG. 1, the architecture of the Android operating system includes 4 layers: an application layer, an application framework layer, a system runtime library layer, and a kernel layer (specifically, may be a Linux kernel layer).

The application layer includes various applications (including a system application and a third-party application) in the Android operating system.

The application framework layer is an application framework, and a developer may develop some applications based on the application framework layer following a rule of developing the application framework.

The system runtime library layer includes a library (also referred to as a system library) and a runtime environment for the Android operating system. The library mainly provides various resources required for the Android operating system. The runtime environment for the Android operating system is used to provide the Android operating system with a software environment.

The kernel layer is an operating system layer of the Android operating system, and is a lowest layer of software levels of the Android operating system. The kernel layer provides the Android operating system with a core system service and a hardware-related driver based on the Linux kernel.

The Android operating system is used as an example. In the embodiments of the present invention, a developer may develop, based on a system architecture of the Android operating system shown in FIG. 1, a software program to implement the icon moving method according to this embodiment of the present invention, so that the icon moving method can be performed based on the Android operating system shown in FIG. 1. That is, a processor or an electronic device can achieve the icon moving method provided according to this embodiment of the present invention by running the software program in the Android operating system.

The electronic device in the embodiment of the present invention may be a mobile electronic device or a non-mobile electronic device. Exemplarily, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a personal computer (personal computer, PC), a television (television, TV), an automated teller machine, a self-service machine, or the like. This is not specifically limited in the embodiments of the present invention.

An icon moving method and electronic device according to the embodiments of the present invention are described in detail below with reference to the accompanying drawings by using specific embodiments and application scenarios thereof.

In an embodiment of the present invention, when a user needs to move an icon (such as an application icon and a folder icon) in a page of a desktop of the electronic device to another page, the user does not need to drag the icons in the page one by one in a traditional way and search for a required pages in each page of the desktop one by one, so as to drag the icons to the page. Instead, the user may perform an input for the page, so that the electronic device can display a plurality of page windows. Therefore, the user can directly perform an input for a page window of the plurality of page windows, so that the icons in one page of the electronic device can be rapidly moved to another page. Therefore, the electronic device can move an icon in the desktop relatively efficiently.

An embodiment of the present invention provides an icon moving method. FIG. 2 shows a flowchart of an icon moving method according to an embodiment of the present invention. The method may be applied to an electronic device with the Android operating system shown in FIG. 1. As shown in FIG. 2, the icon moving method according to this embodiment of the present invention may include the following step 201 to step 204.

Step 201: An electronic device receives a first input.

In this embodiment of the present invention, the first input is an' input by a user for an icon in a first page of the electronic device.

In this embodiment of the present invention, the first input is used to trigger the electronic device to display a plurality of page windows.

It can be understood that after the user performs the first input for an icon in the first page, icons in the first page are all in an editable state (for example, a movable state, a selectable state, a deletable state, or the like).

Optionally, in this embodiment of the present invention, the first page may be a page in the desktop, and an icon in the first page may include at least one of the following: an application icon (that is, an icon corresponding to an application), a folder icon, and the like.

Optionally, in this embodiment of the present invention, the first input may be a long-press input by the user for an icon in the first page.

Step 202: The electronic device displays N page windows in response to the first input.

In this embodiment of the present invention, each of the N page windows is used to indicate a page in the electronic device, and N is greater than or equal to 2 and is an integer.

In this embodiment of the present invention, the N page windows include a page window corresponding to the first page.

It can be understood that after the electronic device receives the first input, the first page may be updated to display the N page windows.

Optionally, in this embodiment of the present invention, each page window may be a thumbnail of a page, and each page window may include at least one icon (for example, the application icon and/or the folder icon).

Optionally, in this embodiment of the present invention, the N page windows may be page windows corresponding to all pages in the desktop, and each of the page windows includes at least one icon.

Optionally, in this embodiment of the present invention, the electronic device may use a first preset display size to display the page window corresponding to the first page, and use a second preset display size to display another page window (that is, a page window of the N page windows except the page window corresponding to the first page).

Optionally, in this embodiment of the present invention, the electronic device can display the page window corresponding to the first page in a first preset region and display another page window in a second preset region.

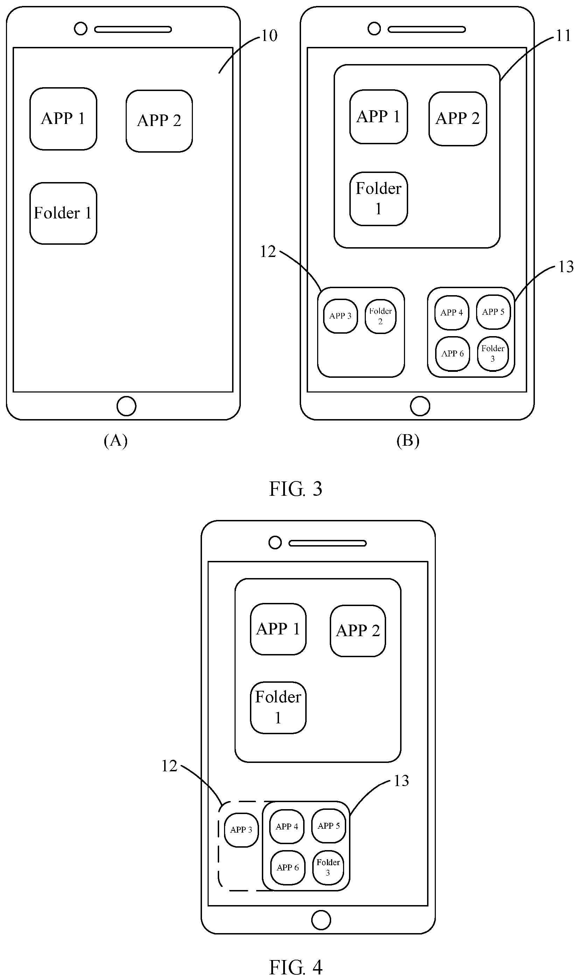

Exemplarily, the following uses an example in which the electronic device is a mobile phone for description. As shown in FIG. 3(A), a mobile phone displays a first page 10 in a desktop. The first page 10 includes at least one icon (for example, an application icon 1, an application icon 2, and a folder icon 1). After the user performs a first input for one (for example, the application icon 1) of the at least one icon, as shown in FIG. 3(B), the mobile phone displays N page windows (for example, a page window 11, a page window 12, and a page window 13). The page window 11 is a page window corresponding to the first page 10. The page window 12 includes at least one icon (for example, an application icon 3 and a folder icon 2). The page window 13 includes at least one icon (for example, an application icon 4, an application icon 5, an application icon 6, and a folder icon 3).

It should be noted that the N page windows displayed by the electronic device are all in an editable state, and icons in the N page windows are all in the editable state.

Step 203: The electronic device receives a second input.

In this embodiment of the present invention, the second input is an input by the user for a first page window and a second page window of the N page windows.

Optionally, in this embodiment of the present invention, the second input may be an input for the user to move the first page window to a region in which the second page window is located.

Optionally, in this embodiment of the present invention, the second input may specifically be an input for the user to long press and drag the first page window to a region in which the second page window is located, so that the first page window overlaps the second page window (that is, the first page window covers the second page window).

It should be noted that the first page window overlapping the second page window can be understood as follows: the first page window completely overlaps or partially overlaps the second page window.

Optionally, in this embodiment of the present invention, after the user performs the second input, an icon in the first page window is a to-be-moved icon, and/or an icon in the second page window is a to-be-moved icon.

Exemplarily, with reference to FIG. 3(B), as shown in FIG. 4, the user may move the first page window (for example, the page window 13) to a region in which the second page window (for example, the page window 12) is located, so that the page window 13 overlaps the page window 12. Icons (For example, an application icon 4, an application icon 5, an application icon 6, and a folder icon 3) in the page window 13 and/or icons (for example, an application icon 3 and a folder icon 2) in the page window 12 are to-be-moved icons.

Step 204: The electronic device moves an icon in a target page window in response to the second input.

In this embodiment of the present invention, the target page window includes at least one of the following: the first page window and the second page window.

Optionally, in this embodiment of the present invention, the electronic device may move an icon (all icons or some icons) in the first page window to the second page window. Alternatively, the electronic device may move an icon (all icons or some icons) in the second page window to the first page window.

Optionally, in this embodiment of the present invention, the electronic device may move the icons (all icons or some icons) in the first page window and the icons (all icons or some icons) in the second page window to a region (such as a folder) in the second page window.

It should be noted that a specific method for moving an icon in the target page window of the electronic device will be described in the following embodiments, which will not be repeated herein again.

This embodiment of the present invention provides the icon moving method, so that the electronic device can display N page windows (each page window is configured to indicate a page in the electronic device) according to the first input, and move an icon in the target page window according to the second input for the first page window and the second page window of the N page windows. Because the user can enable the electronic device to display a plurality of page windows through the first input, the user can directly perform the second input for a page window of the plurality of page windows, so that the electronic device can move an icon in a corresponding page window rapidly, without the need for the user to search for a required page one by one from all pages of the desktop. Therefore, a user's operation can be simplified and time can be saved, so that the electronic device can move an icon in the desktop more efficiently.

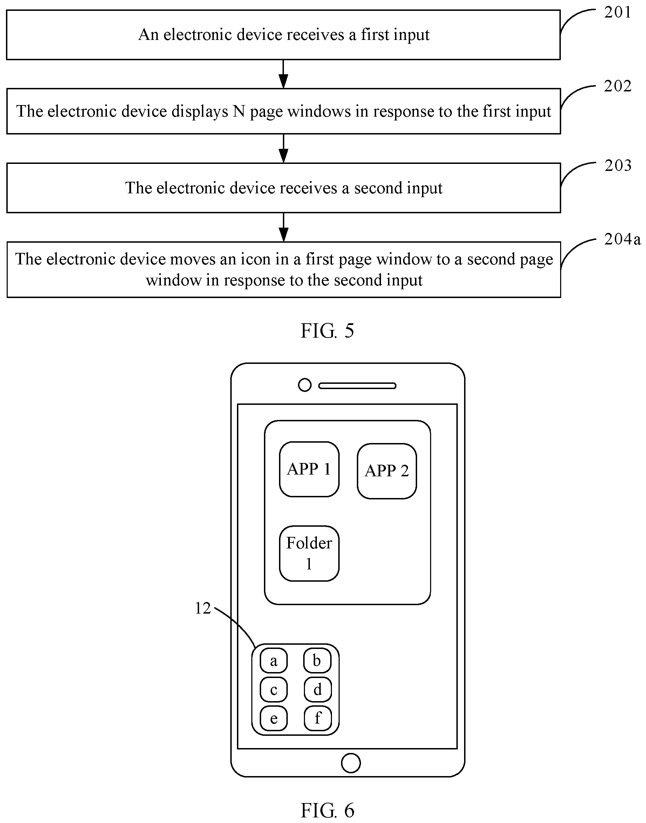

Optionally, in this embodiment of the present invention, the second input is an input for the user to move the first page window to a region in which the second page window is located. As shown in FIG. 5 with reference to FIG. 2, step 204 may be implemented by using the following step 204a.

Step 204a: An electronic device moves an icon in a first page window to a second page window in response to the second input.

In this embodiment of the present invention, the electronic device may move all or some icons in the first page window to the second page window.

Optionally, in this embodiment of the present invention, the electronic device may move all application icons in the first page window to the second page window. Alternatively, the electronic device may move all folder icons in the first page window to the second page window.

It can be understood that the electronic device may move an icon in the first page window to the second page window, so as to move an icon in a page corresponding to the first page window to a page corresponding to the second page window.

In this embodiment of the present invention, the user may enable the electronic device to display a plurality of page windows through a first input, so that the user can directly move the first page window to a region in which the second page window is located. Therefore, the electronic device can quickly move an icon in the first page window to the second page window, without the need for the user to search for a required page (that is, a page corresponding to the second page window) one by one in all pages of a desktop, so that a user's operation can be simplified and time can be saved. Therefore, the electronic device can move an icon in the desktop more efficiently.

Optionally, in this embodiment of the present invention, before "moving an icon in a first page window to a second page window" in step 204a, the icon moving method according to this embodiment of the present invention further includes the following step 301 and step 302, and step 204a may be specifically achieved by the following step 204a1.

Step 301: The electronic device obtains an area of a region in which the first page window overlaps the second page window in response to a second input in a case that the first page window overlaps the second page window.

In this embodiment of the present invention, the area of an overlapping region can be determined by the electronic device according to a size of the first page window and a size of the second page window.

Step 302: A first to-be-moved icon in the first page window is determined by the electronic device according to the area of the overlapping region.

In this embodiment of the present invention, a ratio of the area of the overlapping region to an area of the first page window may be determined by the electronic device, so that the first to-be-moved icon in the first page window can be determined according to the ratio.

Optionally, in this embodiment of the present invention, the first to-be-moved icon may include at least one icon in the first page window. The at least one icon includes at least one of the following: some folder icons, all folder icons, some application icons, and all application icons.

Optionally, in this embodiment of the present invention, step 302 may be specifically implemented by the following step 302a, step 302b, or step 302c.

Step 302a: If a target ratio is greater than or equal to a first preset threshold, a first target icon in the first page window is determined as the first to-be-moved icon by the electronic device.

In this embodiment of the present invention, the target ratio is the ratio of the area of the overlapping region to the area of the first page window.

Optionally, in this embodiment of the present invention, the first target icon may include all folder icons and all application icons in the first page window.

Optionally, in this embodiment of the present invention, in a case that the first page window completely overlaps the second page window (for example, the target ratio is 100%), the electronic device may move all folder icons and all application icons in the first page window to the second page window.

Exemplarily, with reference to FIG. 4, as shown in FIG. 6, if the first page window (that is, the page window 13) completely overlaps the second page window (that is, the page window 12), the mobile phone may move all folder icons and all application icons in the page window 13 to the page window 12, that is, move the application icon 4, the application icon 5, the application icon 6, and the folder icon 3 in the page window 13 to the page window 12. Therefore, the page window 12 includes the application icon 3 (shown as a in FIG. 6), the folder icon 2 (shown as b in FIG. 6), the application icon 4 (shown as c in FIG. 6), the application icon 5 (shown as d in FIG. 6), the application icon 6 (shown as e in FIG. 6), and the folder icon 3 (shown as f in FIG. 6).

Step 302b: If the target ratio is greater than a second preset threshold and less than a first preset threshold, a second target icon in the first page window is determined by the electronic device as the first to-be-moved icon.

Optionally, in this embodiment of the present invention, the second target icon may include all folder icons, all application icons, or some application icons in the first page window. Specifically, this may be determined based on an actual use requirement, and is not limited in this embodiment of the present invention.

Optionally, in this embodiment of the present invention, some application icons may be application icons that meet a preset condition. The preset condition may include at least one of the following: the number of use times is less than or equal to the preset number of times, a use frequency is less than or equal to a third preset threshold, or use duration is less than or equal to preset duration.

Optionally, in this embodiment of the present invention, in a case that the first page window partially overlaps the second page window (for example, the target ratio is greater than 50% and less than 100%), the electronic device may move all folder icons, all application icons, or some application icons in the first page window to the second page window.

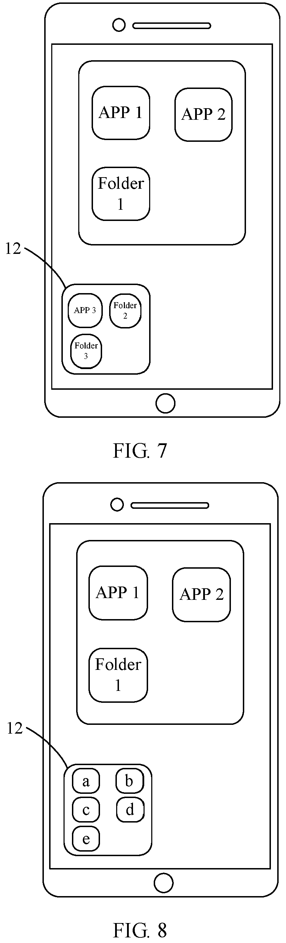

Exemplarily, with reference to FIG. 4, as shown in FIG. 7, if the first page window (that is, the page window 13) partially overlaps the second page window (that is, the page window 12) (for example, the target ratio is greater than 50% and less than 100%), the mobile phone may move all folder icons in the page window 13 to the page window 12, that is, move the folder icon 3 in the page window 13 to the page window 12. Therefore, the page window 12 includes the application icon 3, the folder icon 2, and the folder icon 3.

Step 302c: If the target ratio is less than or equal to a second preset threshold, a third target icon in the first page window is determined by the electronic device as the first to-be-moved icon.

Optionally, in this embodiment of the present invention, the third target icon may include all folder icons, all application icons, or some application icons in the first page window. Specifically, this may be determined based on an actual use requirement, and is not limited in this embodiment of the present invention.

Optionally, in this embodiment of the present invention, in a case that the first page window partially overlaps the second page window (for example, the target ratio is less than or equal to 50%), the electronic device may move all folder icons, all application icons, or some application icons in the first page window to the second page window.

Exemplarily, with reference to FIG. 4, as shown in FIG. 8, if the first page window (that is, the page window 13) partially overlaps the second page window (that is, the page window 12) (for example, the target ratio is less than or equal to 50%), the mobile phone may move all application icons in the page window 13 to the page window 12, that is, move the application icon 4, the application icon 5, and the application icon 6 in the page window 13 to the page window 12. Therefore, the page window 12 includes the application icon 3 (shown as a in FIG. 8), the folder icon 2 (shown as b in FIG. 8), the application icon 4 (shown as c in FIG. 8), the application icon 5 (shown as d in FIG. 8), and the application icon 6 (shown as e in FIG. 8).

Step 204a1: The electronic device moves a first to-be-moved icon to the second page window.

Optionally, in this embodiment of the present invention, the electronic device can display the first to-be-moved icon in a blank region of the second page window. The blank region may be a region in which no icon is displayed in the second page window (that is, another region in the second page window except a region in which a displayed icon is located).

Optionally, in this embodiment of the present invention, the electronic device may display first to-be-moved icons in the blank region of the second page window in sequence in order of displaying each of the first to-be-moved icons in the first page window.

It can be understood that the electronic device may move the first to-be-moved icons to the second page window, so as to move the first to-be-moved icons to a page corresponding to the second page window.

In this embodiment of the present invention, the first to-be-moved icon can be determined by the electronic device according to an area of a region in which the first page window overlaps the second page window, so as to move the first to-be-moved icon to the second page window. Therefore, the electronic device can move an icon in the desktop more flexibly and efficiently.

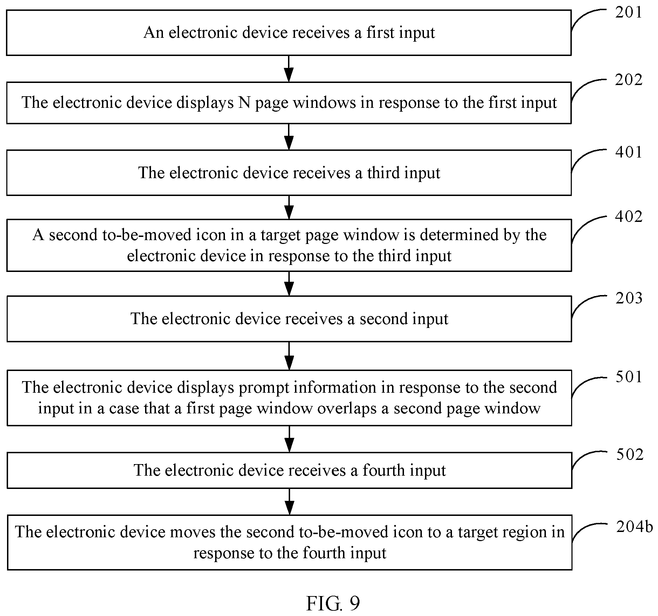

Optionally, in this embodiment of the present invention, with reference to FIG. 2, as shown in FIG. 9, before step 203, the icon moving method according to this embodiment of the present invention further includes the following step 401 and step 402. In addition, before "moving an icon in the target page window" in step 204, the icon moving method according to this embodiment of the present invention further includes the following step 501 and step 502, and the foregoing step 204 may be specifically implemented by the following step 204b.

Step 401: The electronic device receives a third input.

In this embodiment of the present invention, the third input is an input by the user for a second to-be-moved icon in the target page window.

Optionally, in this embodiment of the present invention, the third input may be an input by the user for selecting the second to-be-moved icon in the target page window.

Optionally, in this embodiment of the present invention, the second to-be-moved icon may include at least one icon in the target page window. The at least one icon includes at least one of the following: some folder icons, all folder icons, some application icons in a folder, some application icons, and all application icons.

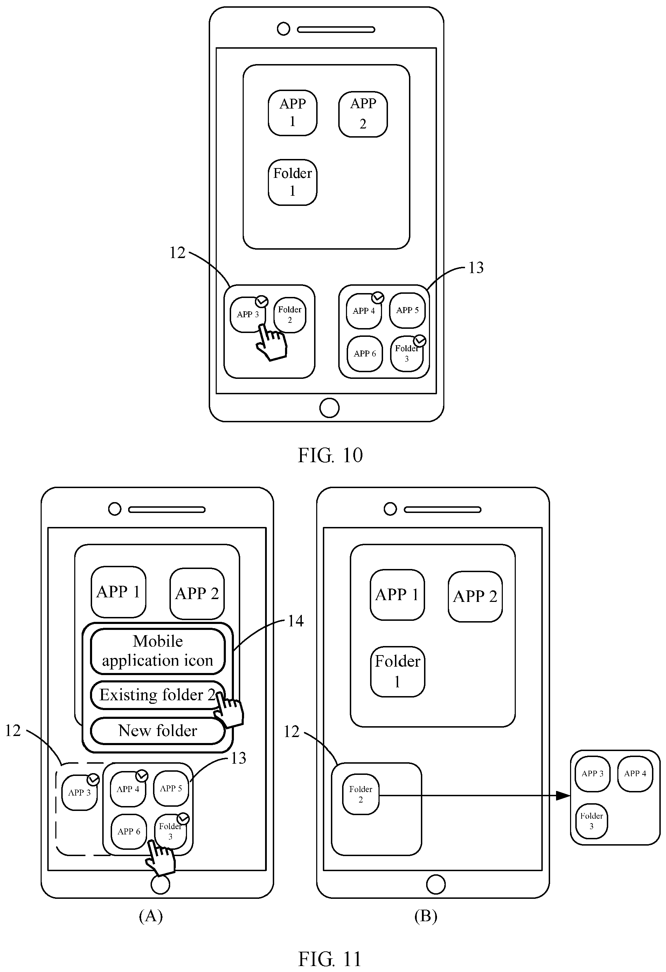

Exemplarily, with reference to FIG. 3 (B), as shown in FIG. 10, the user may perform an input for selecting icons (for example, the application icon 4 and the folder icon 3) in the first page window (that is, the page window 13) and for an icon (such as the application icon 3) in the second page window (that is, the page window 12), so that the application icon 4, the folder icon 3, and the application icon 3 may be determined by the mobile phone as the second to-be-moved icons.

Step 402: The second to-be-moved icon in the target page window is determined by the electronic device in response to the third input.

In this embodiment of the present invention, the electronic device may update the second to-be-moved icon in the target page window to be in a selected state.

Step 501: The electronic device displays prompt information in response to the second input in a case that the first page window overlaps the second page window.

In this embodiment of the present invention, the prompt information is used to remind the user of at least one moving region corresponding to the second to-be-moved icon. The at least one moving region is a region in the second page window.

Optionally, in this embodiment of the present invention, the second input may specifically be an input for the user to move the first page window to the second page window and for that press duration for the second page window is greater than or equal to preset duration.

Optionally, in this embodiment of the present invention, the electronic device can display the prompt information through a floating window.

Optionally, in this embodiment of the present invention, the at least one moving region may include a blank region in the second page window, an existing folder in the second page window, and a new folder in the second page window.

Optionally, in this embodiment of the present invention, the prompt information may include a mobile application icon option, a target folder identifier (for example, a name or an icon) option, and a new folder option. The mobile application icon option is used to move the second to-be-moved icon to the blank region in the second page window. The target folder identifier option is used to move the second to-be-moved icon to a folder in the second page window indicated by a target folder identifier. The new folder option is used to create a folder in the second page window, and move the second to-be-moved icon to a newly created folder.

Step 502: The electronic device receives a fourth input.

In this embodiment of the present invention, the fourth input is an input by the user for a target region in the at least one moving region.

Optionally, in this embodiment of the present invention, the target region is another region in the second page window except a region in which a displayed icon is located. Alternatively, the target region is a region in an interface of at least one folder in the second page window.

Optionally, in this embodiment of the present invention, the fourth input may specifically be an input by the user for selecting the mobile application icon option, and the target region may be a blank region in the second page window.

Optionally, in this embodiment of the present invention, the fourth input may specifically be an input by the user for selecting target folder identifier option, and the target region may be a region in a folder interface in the second page window indicated by a target folder identifier.

Optionally, in this embodiment of the present invention, the fourth input may specifically be an input by the user for selecting the new folder option, and the target region may be a region in a new folder interface in the second page window.

Step 204b: The electronic device moves the second to-be-moved icon to the target region in response to the fourth input.

Optionally, in this embodiment of the present invention, the electronic device may move the second to-be-moved icon in the first page window to a blank region in the second page window. Alternatively, the electronic device may move the second to-be-moved icon in the target page window to a folder in the second page window indicated by the target folder identifier. Alternatively, the electronic device may move the second to-be-moved icon in the target page window to a newly created folder.

Optionally, in this embodiment of the present invention, before "moving the second to-be-moved icon to the target region" in step 204b, the icon moving method according to this embodiment of the present invention further includes the following step 601.

Step 601: The electronic device creates at least one folder in the second page window.

Optionally, in this embodiment of the present invention, the electronic device can create the at least one folder in the second page window according to the fourth input by the user, and name the at least one folder.

Optionally, in this embodiment of the present invention, the electronic device can name the at least one folder in a preset naming mode. Alternatively, the electronic device can display a name input box, so that the user can input a name of the at least one folder, thereby naming the at least one folder.

It can be understood that the electronic device can move the second to-be-moved icon to the target region, so as to move the second to-be-moved icon to a region corresponding to the target region in a page corresponding to the second page window.

Exemplarily, with reference to FIG. 10, as shown in FIG. 11(A), the user can move the first page window (that is, the page window 13) to the second page window (that is, the page window 12), so that the page window 13 overlaps the page window 12, and press the page window 13 for a period of time, so that the mobile phone displays prompt information 14 (including, for example, the mobile application icon option, the target folder identifier (for example, the folder 2) option and the new folder option). As shown in FIG. 11(B), the user can perform an input for selecting an option (for example, the folder 2 option) in the prompt information 14, so that the mobile phone moves the application icon 4, the folder icon 3, and the application icon 3 to the folder 2 in the page window 12 (that is, the folder 2 includes the application icon 3, the application icon 4, and the folder icon 3).

Optionally, in this embodiment of the present invention, after the electronic device moves the second to-be-moved icon to the target region, the second to-be-moved icon may be kept in a selected state, so that the user can continue performing selecting and deselecting the icon.

In this embodiment of the present invention, the second to-be-moved icon can be determined by the electronic device according to a third input by the user, and the second to-be-moved icon can be rapidly moved to a corresponding region in the second page window according to a fourth input by the user. Therefore, the electronic device can move an icon in a desktop more flexibly and efficiently.

Optionally, in this embodiment of the present invention, after step 204, the icon moving method according to this embodiment of the present invention further includes the following step 701 and step 702.

Step 701: The electronic device receives a fifth input.

In this embodiment of the present invention, the fifth input is used to trigger the electronic device to cancel movement of the icon in a target page window.

Optionally, in this embodiment of the present invention, the fifth input may be a drag input by the user for the first page window, so that the first page window and the second page window do not overlap.

Optionally, in this embodiment of the present invention, the fifth input may specifically be an input for the user to drag the first page window to an initial display position.

Step 702: The electronic device cancels, in response to the fifth input, movement of an icon in the target page window.

Optionally, in this embodiment of the present invention, the electronic device can move an icon in the target page window to an initial display position.

It can be understood that the electronic device moves an icon in the target page window to the initial display position, so that an icon in a page corresponding to the target page window can be moved to the initial display position in the desktop.

Optionally, in this embodiment of the present invention, after the electronic device moves or cancels movement of the icon in the target page window, the user may perform an input for selecting a backspace key, so that the electronic device cancels display of N page windows (that is, exits a mobile interface).

In this embodiment of the present invention, the user can enable, through the fifth input, the electronic device to quickly cancel movement of the icon in the target page window, so that the electronic device can sort icons in the page window more flexibly.

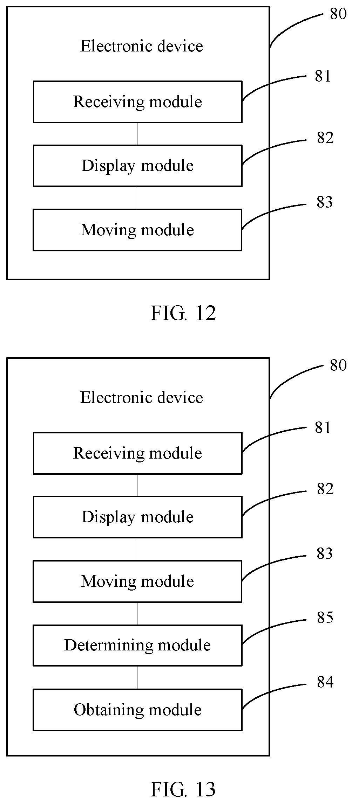

FIG. 12 is a possible schematic structural diagram of an electronic device according to an embodiment of the present invention. As shown in FIG. 12, the electronic device 80 may include a receiving module 81, a display module 82, and a moving module 83.

The receiving module 81 is configured to receive a first input. The display module 82 is configured to display N page windows in response to the first input received by the receiving module 81. Each page window is configured to indicate a page in the electronic device, where N is greater than or equal to 2 and is an integer. The receiving module 81 is further configured to receive a second input. The second input is an input for a first page window and a second page window of the N page windows. The moving module 83 is configured to move an icon in a target page window in response to the second input received by the receiving module 81. The target page window includes at least one of the following: the first page window and the second page window.

In a possible implementation, the second input is an input for moving the first page window to a region in which the second page window is located. The moving module 83 is specifically configured to move an icon in the first page window to the second page window.

In a possible implementation, with reference to FIG. 12, as shown in FIG. 13, the electronic device 80 provided in an embodiment of the present invention further includes an obtaining module 84 and a determining module 85. The obtaining module 84 is configured to obtain, before the moving module 83 moves an icon in the first page window to the second page window, an area of a region in which the first page window overlaps the second page window in a case that the first page window overlaps the second page window. The determining module 85 is configured to determine a first to-be-moved icon in the first page window according to the area of an overlapping region obtained by the obtaining module 84. The moving module 83 is specifically configured to move the first to-be-moved icon determined by the determining module 85 to the second page window.

In a possible implementation, the determining module 85 is specifically configured to: determine a first target icon in the first page window as the first to-be-moved icon if a target ratio is greater than or equal to a first preset threshold, where the target ratio is a ratio of the area of the overlapping region to an area of the first page window; or determine a second target icon in the first page window as the first to-be-moved icon if the target ratio is greater than a second preset threshold and less than a first preset threshold; or determine a third target icon in the first page window as the first to-be-moved icon if the target ratio is less than or equal to a second preset threshold.

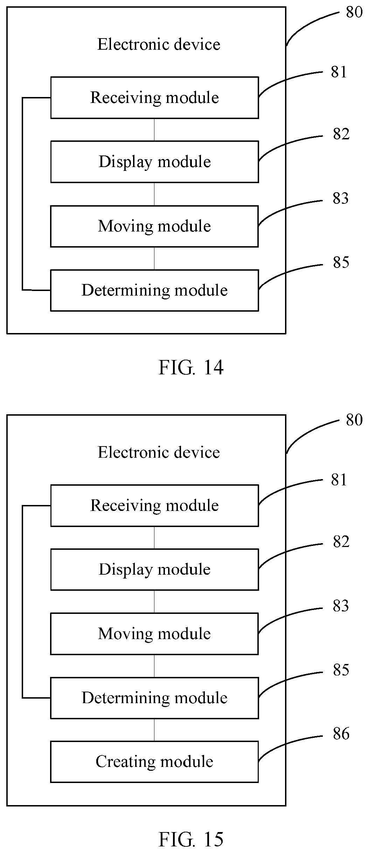

In a possible implementation, the receiving module 81 is further configured to receive a third input before receiving the second input. With reference to FIG. 12, as shown in FIG. 14, the electronic device 80 according to an embodiment of the present invention further includes a determining module 85. The determining module 85 is configured to determine a second to-be-moved icon in the target page window in response to the third input received by the receiving module 81. The display module 82 is further configured to display, before the moving module 83 moves an icon in the target page window, prompt information in a case that the first page window overlaps the second page window. The prompt information is used to remind the user of at least one moving region corresponding to the second to-be-moved icon. The at least one moving region is a region in the second page window. The receiving module 81 is further configured to receive a fourth input. The fourth input is an input for a target region in the at least one moving region. The moving module 83 is specifically configured to move the second to-be-moved icon to the target region in response to the fourth input received by the receiving module 81.

In a possible implementation, the target region is another region in the second page window except a region in which a displayed icon is located. Alternatively, the target region is a region in an interface of at least one folder in the second page window.

In a possible implementation, with reference to FIG. 14, as shown in FIG. 15, the electronic device 80 provided in an embodiment of the present invention further includes a creating module 86. The creating module 86 is configured to create the at least one folder in the second page window before the moving module 83 moves the second to-be-moved icon to the target region.

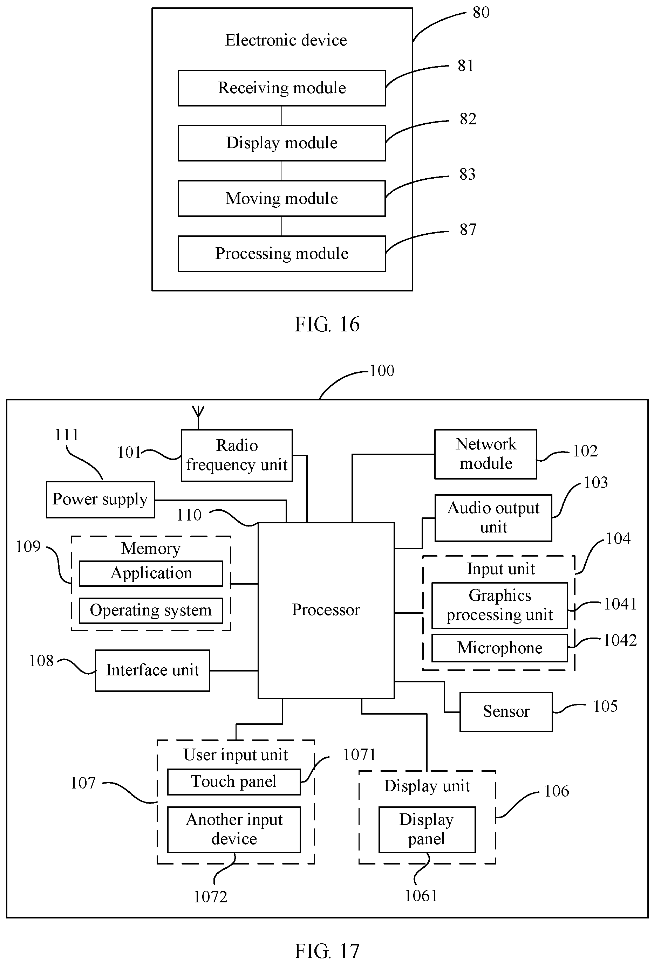

In a possible implementation, the receiving module 81 is further configured to receive a fifth input after the moving module 83 moves an icon in the target page window. With reference to FIG. 12, as shown in FIG. 16, the electronic device 80 according to an embodiment of the present invention further includes a processing module 87. The processing module 87 is configured to cancel movement of the icon in the target page window in response to the fifth input received by the receiving module 81.

The electronic device provided in this embodiment of the present invention can implement the processes that are implemented by the electronic device in the foregoing method embodiments. To avoid repetition, details are not described herein again.

An embodiment of the present invention provides an electronic device. Because a user can enable the electronic device to display a plurality of page windows through a first input, the user can directly perform a second input for a page window of the plurality of page windows, so that the electronic can move an icon in a corresponding page window of the electronic device rapidly, without the need for the user to search for a required page one by one from all pages of the desktop. Therefore, a user's operation can be simplified and time can be saved, and then the electronic device can move an icon in the desktop more efficiently.

FIG. 17 is a schematic diagram of hardware of an electronic device according to embodiments of the present invention. As shown in FIG. 17, the electronic device 100 includes but is not limited to: a radio frequency unit 101, a network module 102, an audio output unit 103, an input unit 104, a sensor 105, a display unit 106, a user input unit 107, an interface unit 108, a memory 109, a processor 110, a power supply 111, and other components.

It should be noted that a person skilled in the art may understand that the structure of the electronic device shown in FIG. 17 constitutes no limitation on the electronic device. The electronic device may include more or fewer components than those shown in FIG. 17, or have a combination of some components, or have a different component arrangement. In this embodiment of the present invention, the electronic device includes but is not limited to a mobile phone, a tablet computer, a notebook computer, a palmtop computer, an in-vehicle terminal, a wearable device, a pedometer, and the like.

The processor 110 is configured to control the user input unit 107 to receive a first input; and control, in response to the first input, the display unit 106 to display N page windows. Each page window is configured to indicate a page in the electronic device, where N is greater than or equal to 2 and is an integer.

The processor 110 is further configured to: control the user input unit 107 to receive a second input, where the second input is an input for a first page window and a second page window of the N page windows; and move an icon in the target page window in response to the second input, where the target page window includes at least one of the following: the first page window and the second page window.

An embodiment of the present invention provides an electronic device. Because a user can enable the electronic device to display a plurality of page windows through a first input, the user can directly perform a second input for a page window of the plurality of page windows, so that the electronic can move an icon in a corresponding page window of the electronic device rapidly, without the need for the user to search for a required page one by one from all pages of the desktop. Therefore, a user's operation can be simplified and time can be saved, and then the electronic device can move an icon in the desktop more efficiently.

It should be understood that in this embodiment of the present invention, the radio frequency unit 101 may be configured to receive and transmit information, or receive and transmit signals during a call. Specifically, the radio frequency unit receives downlink data from a base station, and transmits the downlink data to the processor 110 for processing; and transmits uplink data to the base station. Generally, the radio frequency unit 101 includes, but is not limited to, an antenna, at least one amplifier, a transceiver, a coupler, a low noise amplifier, a duplexer, and the like. In addition, the radio frequency unit 101 may further communicate with a network and other devices through a wireless communication system.

The electronic device provides the user with wireless broadband Internet access through the network module 102, for example, helps the user receive and send e-mails, browse web pages, and access streaming media.

The audio output unit 103 may convert audio data received by the radio frequency unit 101 or the network module 102 or stored in the memory 109 into an audio signal and output the audio signal as a sound. Moreover, the audio output unit 103 can further provide audio output related to a specific function performed by the electronic device 100 (for example, call signal received sound and message received sound). The audio output unit 103 includes a speaker, a buzzer, a telephone receiver, and the like.

The input unit 104 is configured to receive audio or radio frequency signals. The input unit 104 may include a graphics processing unit (Graphics Processing Unit, GPU) 1041 and a microphone 1042. The graphics processing unit 1041 processes image data of a static image or video obtained by an image capture apparatus (such as, a camera) in a video capture mode or an image capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 may receive sound and can process such sound into audio data. The processed audio data may be converted, in a telephone call mode, into a format that may be sent to a mobile communication base station via the radio frequency unit 101 for output.

The electronic device 100 further includes at least one sensor 105, for example, a light sensor, a motion sensor, and another sensor. Specifically, the light sensor includes an ambient light sensor and a proximity sensor. The ambient light sensor may adjust brightness of a display panel 1061 according to ambient light brightness. The proximity sensor may switch off the display panel 1061 and/or backlight when the electronic device 100 moves close to an ear. As a motion sensor, an accelerometer sensor may detect magnitude of acceleration in various directions (usually three axes), may detect magnitude and a direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 105 may further include a fingerprint sensor, a pressure sensor, an iris sensor, a molecular sensor, a gyroscope, a barometer, a hygrometer, a thermometer, an infrared sensor, or the like. Details are not described herein again.

The display unit 106 is configured to display information entered by the user or information provided for the user. The display unit 106 may include a display panel 1061, and the display panel 1061 may be configured in a form of a liquid crystal display (Liquid Crystal Display, LCD), an organic light-emitting diode (Organic Light-Emitting Diode, OLED), or the like.

The user input unit 107 may be configured to receive entered number or character information, and generate key signal input related to user settings and function control of the electronic device. Specifically, the user input unit 107 includes a touch panel 1071 and another input device 1072. The touch panel 1071 is also referred to as a touchscreen, and may collect a touch operation of the user on or near the touch panel 1071 (for example, an operation performed on or near the touch panel 1071 by the user by using any appropriate object or accessory such as a finger or a stylus). The touch panel 1071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, sends the touch point coordinates to a processor 110, and receives and executes a command sent by the processor 110. In addition, the touch panel 1071 may be implemented by various types such as a resistive type, a capacitive type, an infrared ray type, or a surface acoustic wave type. In addition to the touch panel 1071, the user input unit 107 may further include another input device 1072. Specifically, the another input device 1072 may include but is not limited to: a physical keyboard, a function key (such as a volume control key, a switch key), a trackball, a mouse, and a joystick, which is not described herein.

Further, the touch panel 1071 may cover the display panel 1061. When detecting a touch operation on or near the touch panel, the touch panel 1071 transmits the touch operation to the processor 110 to determine a type of a touch event. Then, the processor 110 provides corresponding visual output on the display panel 1061 based on the type of the touch event. Although the touch panel 1071 and the display panel 1061 in FIG. 17 are configured as two independent components to implement input and output functions of the electronic device, in some embodiments, the touch panel 1071 and the display panel 1061 may be integrated to implement the input and output functions of the electronic device. Details are not limited herein.

The interface unit 108 is an interface for connecting an external apparatus and the electronic device 100. For example, the external apparatus may include a wired or wireless headset jack, an external power supply (or a battery charger) port, a wired or wireless data port, a storage card port, a port for connecting an apparatus having an identification module, an audio input/output (I/O) port, a video I/O port, a headset jack, or the like. The interface unit 108 may be configured to receive an input (for example, data information and power) from an external apparatus and transmit the received input to one or more elements in the electronic device 100, or may be configured to transmit data between the electronic device 100 and the external apparatus.

The memory 109 may be configured to store a software program and various pieces of data. The memory 109 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 109 may include a high-speed random access memory or a nonvolatile memory, for example, at least one disk storage device, a flash memory, or other volatile solid-state storage devices.

The processor 110 is a control center of the electronic device and connects all parts of the electronic device using various interfaces and circuits. By running or executing software programs and/or modules stored in the memory 109 and by calling data stored in the memory 109, the processor 110 implements various functions of the electronic device and processes data, thus performing overall monitoring on the electronic device. The processor 110 may include one or more processing units. Optionally, an application processor and a modem processor may be integrated into the processor 110. The application processor mainly processes an operating system, a user interface, an application, and the like. The modem processor mainly processes wireless communication. It can be understood that the modem processor may not be integrated into the processor 110.

The electronic device 100 may further include the power supply 111 (such as a battery) supplying power to each component. Preferably, the power supply 111 may be logically connected to the processor 110 by using a power management system, so as to implement functions such as charging management, discharging management, and power consumption management by using the power management system.

In addition, the electronic device 100 includes some functional modules not shown. Details are not described herein.

Optionally, an embodiment of the present invention further provides an electronic device, including a processor 110 shown in FIG. 17, a memory 109, and a computer program that is stored in the memory 109 and that can be run on the processor 110. When the computer program is executed by the processor 110, the processes of the foregoing method embodiments are implemented, and a same technical effect can be achieved. To avoid repetition, details are not described herein again.

An embodiment of the present invention further provides a computer-readable storage medium. The computer-readable storage medium stores a computer program, where when the computer program is executed by a processor, the processes in the foregoing method embodiments are implemented, and a same technical effect can be achieved. To avoid repetition, details are not described herein again. The computer readable storage medium is, for example, a read-only memory (Read-Only Memory, ROM), a random access memory (Random Access Memory, RAM), a magnetic disk, an optical disc, or the like.

It should be noted that in this specification, the terms "comprise", "include" or any other variants thereof are intended to cover non-exclusive inclusion, so that a process, a method, an article, or an apparatus that includes a series of elements not only includes these elements, but also includes other elements not expressly listed, or also includes elements inherent to this process, method, article, or apparatus. An element limited by "includes a ..." does not, without more constraints, preclude the presence of additional identical elements in the process, method, article, or apparatus that includes the element.

Based on the foregoing descriptions of the implementation, a person skilled in the art may clearly understand that the method in the foregoing embodiment may be implemented by software in addition to a necessary universal hardware platform or by hardware only. In most circumstances, the former is a preferred implementation manner. Based on such understanding, the technical solutions of the present invention essentially or the part contributing to the prior art may be implemented in a form of a software product. The computer software product is stored in a storage medium (such as a ROM/RAM, a magnetic disk, or an optical disc), and includes several instructions for instructing an electronic device (which may be a mobile phone, a computer, a server, an air conditioner, a network device, or the like) to perform the method according to the embodiments of the present invention.

The embodiments of the present invention are described above with reference to the accompanying drawings, but the present invention is not limited to the foregoing specific implementations, and the foregoing specific implementations are only illustrative and not restrictive. Under the enlightenment of the present invention, a person of ordinary skill in the art can make many forms without departing from the purpose of the present invention and the protection scope of the claims.

## Claims

1. An icon moving method, applied to an electronic device (80) the method comprising:
receiving (201) a first input; and
displaying (202) N page windows in response to the first input, wherein each page window is configured to indicate a page in the electronic device, and N is greater than or equal to 2 and is an integer;
receiving (203) a second input, wherein the second input is an input for a first page window and a second page window of the N page windows, wherein the second input is an input for moving the first page window to a region in which the second page window is located; and
moving (204) an icon in a target page window in response to the second input, wherein the target page window comprises at least one of the following: the first page window and the second page window,
wherein moving (204) the icon in the target page window comprises:
moving (204a) the icon in the first page window to the second page window,
**characterized in that** the icon to be
moved is determined according to a ratio of an area of an overlapping region of the first page window and the second page window to an area of the first page window.

2. The method according to claim 1, wherein before the moving (204a) an icon in the first page window to the second page window, the method further comprises:
obtaining an area of a region in which the first page window overlaps the second page window in a case that the first page window overlaps the second page window;
determining a first to-be-moved icon in the first page window according to the area of an overlapping region; and
the moving an icon in the first page window to the second page window comprises:
moving the first to-be-moved icon to the second page window.

3. The method according to claim 2, wherein the determining a first to-be-moved icon in the first page window according to the area of an overlapping region comprises:
if a target ratio is greater than or equal to a first preset threshold, determining a first target icon in the first page window as the first to-be-moved icon, wherein the target ratio is a ratio of the area of the overlapping region to an area of the first page window;
if the target ratio is greater than a second preset threshold and less than a first preset threshold, determining a second target icon in the first page window as the first to-be-moved icon; or
if the target ratio is less than or equal to a second preset threshold, determining a third target icon in the first page window as the first to-be-moved icon.

4. The method according to claim 1, wherein before the receiving (203) a second input, the method further comprises:
receiving (401) a third input;
determining (402) a second to-be-moved icon in the target page window in response to the third input; and
before the moving (204) an icon in a target page window, the method further comprises:
displaying (501) prompt information in a case that the first page window overlaps the second page window, wherein the prompt information is used to prompt at least one moving region corresponding to the second to-be-moved icon, and the at least one moving region is a region in the second page window;
receiving (502) a fourth input, wherein the fourth input is an input for a target region in the at least one moving region; and
the moving (204) an icon in a target page window comprises:
moving (204b) the second to-be-moved icon to the target region in response to the fourth input.

5. The method according to claim 4, wherein the target region is another region in the second page window except a region in which a displayed icon is located;
or
the target region is a region in an interface of at least one folder in the second page window;
wherein before the moving (204b) the second to-be-moved icon to the target region, the method further comprises:
creating the at least one folder in the second page window.

6. The method according to claim 1, wherein after the moving an icon in a target page window, the method further comprises:
receiving a fifth input; and
canceling, in response to the fifth input, movement of the icon in the target page window.

7. An electronic device (80), comprising: a receiving module (81), a display module (82), and a moving module (83); wherein
the receiving module (81) is configured to receive a first input;
the display module (82) is configured to display N page windows in response to the first input received by the receiving module, wherein each page window is configured to indicate a page in the electronic device, and N is greater than or equal to 2 and is an integer;
the receiving module (81) is further configured to receive a second input, wherein the second input is an input for a first page window and a second page window of the N page windows, wherein the second input is an input for moving the first page window to a region in which the second page window is located; and
the moving module (83) is configured to move an icon in a target page window in response to the second input received by the receiving module, wherein the target page window comprises at least one of the following: the first page window and the second page window,
the moving module (83) is specifically configured to move the icon in the first page window to the second page window,
**characterized in that** the icon to be moved is determined according to a ratio of an area of an overlapping region of the first page window and the second page window to an area of the first page window.

8. The electronic device (80) according to claim 7, further comprising: an obtaining module (84) and a determining module (85), wherein
the obtaining module (84) is configured to obtain, before the moving module (83) moves the icon in the first page window to the second page window, an area of a region in which the first page window overlaps the second page window in a case that the first page window overlaps the second page window;
the determining module (85) is configured to determine a first to-be-moved icon in the first page window according to the area of an overlapping region obtained by the obtaining module; and
the moving module (83) is specifically configured to move the first to-be-moved icon determined by the determining module to the second page window.

9. The electronic device according to claim 8, wherein the determining module (85) is specifically configured to: determine a first target icon in the first page window as the first to-be-moved icon if a target ratio is greater than or equal to a first preset threshold, wherein the target ratio is a ratio of the area of the overlapping region to an area of the first page window; or determine a second target icon in the first page window as the first to-be-moved icon if the target ratio is greater than a second preset threshold and less than a first preset threshold; or determine a third target icon in the first page window as the first to-be-moved icon if the target ratio is less than or equal to a second preset threshold.

10. The electronic device according to claim 7, wherein the receiving module (81) is further configured to receive a third input before receiving the second input;
the electronic device further comprises a determining module (85);
the determining module (85) is configured to determine a second to-be-moved icon in the target page window in response to the third input received by the receiving module (81);
the display module (82) is further configured to display, before the moving module (83) moves the icon in the target page window, prompt information in a case that the first page window overlaps the second page window, wherein the prompt information is used to prompt at least one moving region corresponding to the second to-be-moved icon, and the at least one moving region is a region in the second page window;
the receiving module (81) is further configured to receive a fourth input, wherein the fourth input is an input for a target region in the at least one moving region; and
the moving module (83) is specifically configured to move the second to-be-moved icon to the target region in response to the fourth input received by the receiving module.

11. The electronic device (80) according to claim 10, wherein the target region is another region in the second page window except a region in which a displayed icon is located;
or
the target region is a region in an interface of at least one folder in the second page window;
wherein the electronic device (80) further comprises a creating module (86), wherein
the creating module (86) is configured to create the at least one folder in the second page window before the moving module (83) moves the second to-be-moved icon to the target region.

12. The electronic device (80) according to claim 7, wherein the receiving module (81) is further configured to receive a fifth input after the moving module moves the icon in the target page window; and
the electronic device (80) further comprises a processing module (87), wherein
the processing module (87) is configured to cancel movement of the icon in the target page window in response to the fifth input received by the receiving module (81).

13. A computer-readable storage medium storing a computer program, and when the computer program is executed by a processor, the steps of the icon moving method according to any one of claims 1 to 6 are implemented.

## Patentansprüche

1. Ein Symbolverschiebungsverfahren, angewendet auf eine elektronische Vorrichtung (80) das Verfahren umfassend:
Empfangen (201) einer ersten Eingabe; und
Anzeigen (202) von N Seitenfenstern als Reaktion auf die erste Eingabe, wobei jedes Seitenfenster dazu eingerichtet ist, eine Seite in der elektronischen Vorrichtung anzuzeigen, und N größer als oder gleich 2 und eine ganze Zahl ist;
Empfangen (203) einer zweiten Eingabe, wobei die zweite Eingabe eine Eingabe für ein erstes Seitenfenster und ein zweites Seitenfenster der N Seitenfenster ist, wobei die zweite Eingabe eine Eingabe zum Verschieben des ersten Seitenfensters in einen Bereich ist, in dem sich das zweite Seitenfenster befindet;
und
Verschieben (204) eines Symbols in einem Zielseitenfenster als Reaktion auf die zweite Eingabe, wobei das Zielseitenfenster mindestens eines der Folgenden umfasst: das erste Seitenfenster und das zweite Seitenfenster,
wobei das Verschieben (204) des Symbols in dem Zielseitenfenster umfasst:
Verschieben (204a) des Symbols in dem ersten Seitenfenster zu dem zweiten Seitenfenster, **dadurch gekennzeichnet, dass** das zu
verschiebende Symbol gemäß einem Verhältnis einer Fläche eines Überlappungsbereichs des ersten Seitenfensters und des zweiten Seitenfensters zu einer Fläche des ersten Seitenfensters bestimmt wird.

2. Das Verfahren nach Anspruch 1, wobei vor dem Verschieben (204a) eines Symbols in dem ersten Seitenfenster zu dem zweiten Seitenfenster das Verfahren ferner umfasst:
Erhalten einer Fläche eines Bereichs, in dem das erste Seitenfenster das zweite Seitenfenster überlappt, in einem Fall, in dem das erste Seitenfenster das zweite Seitenfenster überlappt;
Bestimmen eines ersten zu verschiebenden Symbols in dem ersten Seitenfenster gemäß der Fläche eines Überlappungsbereichs; und
das Verschieben eines Symbols in dem ersten Seitenfenster zu dem zweiten Seitenfenster umfasst:
Verschieben des ersten zu verschiebenden Symbols zu dem zweiten Seitenfenster.

3. Das Verfahren nach Anspruch 2, wobei das Bestimmen eines ersten zu verschiebenden Symbols in dem ersten Seitenfenster gemäß der Fläche eines Überlappungsbereichs umfasst:
wenn ein Zielverhältnis größer als oder gleich einem ersten voreingestellten Schwellenwert ist, Bestimmen eines ersten Zielsymbols im ersten Seitenfenster als das erste zu verschiebende Symbol, wobei das Zielverhältnis ein Verhältnis von der Fläche des Überlappungsbereichs zu einer Fläche des ersten Seitenfensters ist;
wenn das Zielverhältnis größer als ein zweiter voreingestellter Schwellenwert und kleiner als ein erster voreingestellter Schwellenwert ist, Bestimmen eines zweiten Zielsymbols im ersten Seitenfenster als das erste zu verschiebende Symbol; oder
wenn das Zielverhältnis kleiner als oder gleich einem zweiten voreingestellten Schwellenwert ist, Bestimmen eines dritten Zielsymbols im ersten Seitenfenster als das erste zu verschiebende Symbol.

4. Verfahren nach Anspruch 1, wobei vor dem Empfangen (203) einer zweiten Eingabe das Verfahren ferner umfasst:
Empfangen (401) einer dritten Eingabe;
Bestimmen (402) eines zweiten zu verschiebenden Symbols im Zielseitenfenster als Reaktion auf die dritte Eingabe; und
vor dem Verschieben (204) eines Symbols in einem Zielseitenfenster umfasst das Verfahren ferner:
Anzeigen (501) von Hinweisinformationen in einem Fall, in dem das erste Seitenfenster das zweite Seitenfenster überlappt, wobei die Hinweisinformationen verwendet werden, um auf mindestens einen Verschiebebereich hinzuweisen, der dem zweiten zu verschiebenden Symbol entspricht, und der mindestens eine Verschiebebereich ein Bereich im zweiten Seitenfenster ist;
Empfangen (502) einer vierten Eingabe, wobei die vierte Eingabe eine Eingabe für einen Zielbereich in dem mindestens einen Verschiebebereich ist; und
das Verschieben (204) eines Symbols in einem Zielseitenfenster umfasst:
Verschieben (204b) des zweiten zu verschiebenden Symbols in den Zielbereich als Reaktion auf die vierte Eingabe.

5. Verfahren nach Anspruch 4, wobei der Zielbereich ein anderer Bereich in dem zweiten Seitenfenster außer einem Bereich ist, in dem sich ein angezeigtes Symbol befindet;
oder
der Zielbereich ein Bereich in einer Schnittstelle mindestens eines Ordners im zweiten Seitenfenster ist;
wobei vor dem Verschieben (204b) des zweiten zu verschiebenden Symbols in den Zielbereich das Verfahren ferner umfasst:
Erstellen des mindestens eines Ordners in dem zweiten Seitenfenster.

6. Das Verfahren nach Anspruch 1, wobei nach dem Verschieben eines Symbols in einem Zielseitenfenster das Verfahren ferner umfasst:
Empfangen einer fünften Eingabe; und
Abbrechen der Verschiebung des Symbols in dem Zielseitenfenster als Reaktion auf die fünfte Eingabe.

7. Eine elektronische Vorrichtung (80), umfassend: ein Empfangsmodul (81), ein Anzeigemodul (82) und ein Verschiebemodul (83); wobei
das Empfangsmodul (81) dazu eingerichtet ist, eine erste Eingabe zu empfangen;
das Anzeigemodul (82) dazu eingerichtet ist, N Seitenfenster als Reaktion auf die erste durch das Empfangsmodul empfangene Eingabe anzuzeigen, wobei jedes Seitenfenster dazu eingerichtet ist, eine Seite in der elektronischen Vorrichtung anzugeben, und N größer als oder gleich 2 und eine ganze Zahl ist;
das Empfangsmodul (81) ferner dazu eingerichtet ist, eine zweite Eingabe zu empfangen, wobei die zweite Eingabe eine Eingabe für ein erstes Seitenfenster und ein zweites Seitenfenster unter den N Seitenfenstern ist, wobei die zweite Eingabe eine Eingabe zum Verschieben des ersten Seitenfensters in einen Bereich ist, in dem sich das zweite Seitenfenster befindet; und
das Verschiebemodul (83) dazu eingerichtet ist, ein Symbol in einem Zielseitenfenster als Reaktion auf die durch das Empfangsmodul empfangene zweite Eingabe zu verschieben, wobei das Zielseitenfenster mindestens eines der Folgenden umfasst: das erste Seitenfenster und das zweite Seitenfenster,
das Verschiebemodul (83) insbesondere dazu eingerichtet ist, das
Symbol in dem ersten Seitenfenster in das zweite Seitenfenster zu verschieben, **dadurch gekennzeichnet, dass** das zu verschiebende Symbol anhand eines Verhältnisses einer Fläche eines Überlappungsbereichs des ersten Seitenfensters und des zweiten Seitenfensters zu einer Fläche des ersten Seitenfensters bestimmt wird.

8. Die elektronische Vorrichtung (80) nach Anspruch 7, ferner umfassend: ein Erhaltungsmodul (84) und ein Bestimmungsmodul (85), wobei
das Erhaltungsmodul (84) dazu eingerichtet ist, bevor das Verschiebemodul (83) das Symbol in dem ersten Seitenfenster in das zweite Seitenfenster verschiebt, eine Fläche eines Bereichs zu erhalten, in dem das erste Seitenfenster das zweite Seitenfenster überlappt, in einem Fall, in dem das erste Seitenfenster das zweite Seitenfenster überlappt;
das Bestimmungsmodul (85) ist dazu eingerichtet, ein erstes zu verschiebendes Symbol in dem ersten Seitenfenster gemäß der Fläche eines durch das Erhaltungsmodul erhaltenen Überlappungsbereichs zu bestimmen;
und
das Verschiebemodul (83) ist speziell dazu eingerichtet, das erste zu verschiebende Symbol das durch das Bestimmungsmodul bestimmt wurde, in das zweite Seitenfenster zu verschieben.

9. Die elektronische Vorrichtung nach Anspruch 8, wobei das Bestimmungsmodul (85) speziell dazu eingerichtet ist: ein erstes Zielsymbol in dem ersten Seitenfenster als das erste zu verschiebende Symbol zu bestimmen, wenn ein Zielverhältnis größer als oder gleich einem ersten voreingestellten Schwellenwert ist, wobei das Zielverhältnis ein Verhältnis der Fläche des Überlappungsbereichs zu einer Fläche des ersten Seitenfensters ist; oder ein zweites Zielsymbol in dem ersten Seitenfenster als das erste zu verschiebende Symbol zu bestimmen, wenn das Zielverhältnis größer als ein zweiter voreingestellter Schwellenwert und kleiner als ein erster voreingestellter Schwellenwert ist; oder ein drittes Zielsymbol in dem ersten Seitenfenster als das erste zu verschiebende Symbol zu bestimmen, wenn das Zielverhältnis kleiner als oder gleich einem zweiten voreingestellten Schwellenwert ist.

10. Die elektronische Vorrichtung nach Anspruch 7, wobei das Empfangsmodul (81) ferner dazu eingerichtet ist, eine dritte Eingabe zu empfangen, bevor es die zweite Eingabe empfängt;
die elektronische Vorrichtung umfasst ferner ein Bestimmungsmodul (85);
das Bestimmungsmodul (85) ist dazu eingerichtet, ein zweites zu verschiebendes Symbol in dem Zielseitenfenster als Reaktion auf die durch das Empfangsmodul (81) empfangene dritte Eingabe zu bestimmen;
das Anzeigemodul (82) ist ferner dazu eingerichtet, bevor das Verschiebemodul (83) das Symbol in dem Zielseitenfenster verschiebt, Aufforderungsinformationen anzuzeigen, falls das erste Seitenfenster das zweite Seitenfenster überlappt, wobei die Aufforderungsinformationen dazu verwendet werden, auf mindestens einen dem zweiten zu verschiebenden Symbol entsprechenden Verschiebebereich hinzuweisen, und der mindestens eine Verschiebebereich ein Bereich in dem zweiten Seitenfenster ist;
das Empfangsmodul (81) ist ferner dazu eingerichtet, eine vierte Eingabe zu empfangen, wobei die vierte Eingabe eine Eingabe für einen Zielbereich in dem mindestens einen Verschiebebereich ist; und
das Verschiebemodul (83) ist speziell dazu eingerichtet, das zweite zu verschiebende Symbol als Reaktion auf die durch das Empfangsmodul empfangene vierte Eingabe in den Zielbereich zu verschieben.

11. Die elektronische Vorrichtung (80) nach Anspruch 10, wobei der Zielbereich ein anderer Bereich in dem zweiten Seitenfenster mit Ausnahme eines Bereichs ist, in dem sich ein angezeigtes Symbol befindet;
oder
der Zielbereich ein Bereich in einer Schnittstelle mindestens eines Ordners in dem zweiten Seitenfenster ist;
wobei die elektronische Vorrichtung (80) ferner ein Erstellungsmodul (86) umfasst, wobei
das Erstellungsmodul (86) dazu eingerichtet ist, den mindestens einen Ordner in dem zweiten Seitenfenster zu erstellen, bevor das Verschiebemodul (83) das zweite zu verschiebende Symbol in den Zielbereich verschiebt.

12. Die elektronische Vorrichtung (80) nach Anspruch 7, wobei das Empfangsmodul (81) ferner dazu eingerichtet ist, eine fünfte Eingabe zu empfangen, nachdem das Verschiebemodul das Symbol in dem Zielseitenfenster verschoben hat; und
die elektronische Vorrichtung (80) ferner ein Verarbeitungsmodul (87) umfasst, wobei
das Verarbeitungsmodul (87) dazu eingerichtet ist, die Verschiebung des Symbols in dem Zielseitenfenster als Reaktion auf die von dem Empfangsmodul (81) empfangene fünfte Eingabe rückgängig zu machen.

13. Ein computerlesbares Speichermedium, das ein Computerprogramm speichert, und wenn das Computerprogramm durch einen Prozessor ausgeführt wird, werden die Schritte des Symbolverschiebungsverfahrens nach einem der Patentansprüche 1 bis 6 implementiert.

## Revendications

1. Un procédé de déplacement d'icône, appliqué à un dispositif électronique (80) le procédé comprenant :
recevoir (201) une première entrée ; et
afficher (202) N fenêtres de page en réponse à la première entrée, dans lequel chaque fenêtre de page
est configurée pour indiquer une page dans le dispositif électronique, et N est supérieur ou égal à 2 et est un entier ;
recevoir (203) une deuxième entrée, dans lequel la deuxième entrée est une entrée pour une fenêtre de première page et une fenêtre de deuxième page parmi les N fenêtres de page, dans lequel la deuxième entrée est une entrée pour déplacer la fenêtre de première page vers une région dans laquelle se trouve la fenêtre de deuxième page; et
déplacer (204) une icône dans une fenêtre de page cible en réponse à la deuxième entrée, dans lequel la fenêtre de page cible comprend au moins un des éléments suivants: la fenêtre de première page et la fenêtre de deuxième page,
dans lequel déplacer (204) l'icône dans la fenêtre de page cible comprend :
déplacer (204a) l'icône dans la fenêtre de première fenêtre de page de deuxième page, **caractérisé en ce que** l'icône à
déplacer est déterminée selon un rapport entre l'aire d'une région de chevauchement de la fenêtre de première fenêtre de fenêtre de deuxième page de première page.

2. Le procédé selon la revendication 1, dans lequel, avant le déplacement (204a) d'une icône dans la fenêtre de première page vers la fenêtre de deuxième page, le procédé comprend en outre :
obtenir l'aire d'une région dans laquelle la fenêtre de première page chevauche la fenêtre de deuxième page, dans le cas où la fenêtre de première page chevauche la fenêtre de deuxième page;
déterminer une première icône à déplacer dans la fenêtre de première page selon l'aire d'une région de chevauchement ; et
le déplacement d'une icône dans la fenêtre de première page vers la fenêtre de deuxième page comprend :
déplacer la première icône à déplacer vers la fenêtre de deuxième page.

3. Le procédé selon la revendication 2, dans lequel la détermination d'une première icône à déplacer dans la fenêtre de première page selon l'aire d'une région de chevauchement comprend :
si un rapport cible est supérieur ou égal à un premier seuil prédéfini, déterminer une première icône cible dans la fenêtre de première page comme la première icône à déplacer, dans lequel le rapport cible est un rapport de la surface de la région de chevauchement à une surface de la fenêtre de première page ;
si le rapport cible est supérieur à un deuxième seuil prédéfini et inférieur à un premier seuil prédéfini, déterminer une deuxième icône cible dans la fenêtre de première page comme la première icône à déplacer; ou
si le rapport cible est inférieur ou égal à un deuxième seuil prédéfini, déterminer une troisième icône cible dans la fenêtre de première page comme la première icône à déplacer.

4. Le procédé selon la revendication 1, dans lequel, avant la réception (203) d'une deuxième entrée, le procédé comprend en outre :
recevoir (401) une troisième entrée ;
déterminer (402) une deuxième icône à déplacer dans la fenêtre de page cible en réponse à la troisième entrée ; et
avant le déplacement (204) d'une icône dans une fenêtre de page cible, le procédé comprend en outre :
afficher (501) des informations d'invite dans le cas où la fenêtre de première page chevauche la fenêtre de deuxième page, dans lequel les informations d'invite sont utilisées pour indiquer au moins une région de déplacement correspondant à la deuxième icône à déplacer, et l'au moins une région de déplacement est une région dans la fenêtre de deuxième page ;
recevoir (502) une quatrième entrée, dans lequel la quatrième entrée est une entrée pour une région cible dans l'au moins une région de déplacement ; et
le déplacement (204) d'une icône dans une fenêtre de page cible comprend :
déplacer (204b) la deuxième icône à déplacer vers la région cible en réponse à la quatrième entrée.

5. Le procédé selon la revendication 4, dans lequel la région cible est une autre région dans la fenêtre de deuxième page, à l'exception d'une région dans laquelle se trouve une icône affichée ;
ou
la région cible est une région dans une interface d'au moins un dossier dans la fenêtre de deuxième page ;
dans lequel, avant le déplacement (204b) de la deuxième icône à déplacer vers la région cible, le procédé comprend en outre :
créant l'au moins un dossier dans la fenêtre de deuxième page.

6. Le procédé selon la revendication 1, dans lequel, après le déplacement d'une icône dans une fenêtre de page cible, le procédé comprend en outre :
recevoir une cinquième entrée ; et
annuler, en réponse à la cinquième entrée, le déplacement de l'icône dans la fenêtre de page cible.

7. Un dispositif électronique (80), comprenant : un module de réception (81), un module d'affichage (82), et un module de déplacement (83) ; dans lequel
le module de réception (81) est configuré pour recevoir une première entrée ;
le module d'affichage (82) est configuré pour afficher N fenêtres de page en réponse à la première entrée reçue par le module de réception, dans lequel chaque fenêtre de page est configurée pour indiquer une page dans le dispositif électronique, et N est supérieur ou égal à 2 et est un entier ;
le module de réception (81) est en outre configuré pour recevoir une deuxième entrée, dans lequel la deuxième entrée est une entrée pour une fenêtre de première fenêtre de page de deuxième page des N fenêtres de page, dans lequel la deuxième entrée est une entrée pour déplacer la fenêtre de première page vers une région dans laquelle la fenêtre de deuxième page est située ; et
le module de déplacement (83) est configuré pour déplacer une icône dans une fenêtre de page cible en réponse à la deuxième entrée reçue par le module de réception,
la fenêtre de page cible comprend au moins l'un des éléments suivants : la fenêtre de première page et la fenêtre de deuxième page,
le module de déplacement (83) est spécifiquement configuré pour déplacer l'icône dans la fenêtre de première page vers la fenêtre de deuxième page, **caractérisé en ce que** l'icône à déplacer est déterminée selon un rapport entre l'aire d'une région de chevauchement de la fenêtre de première page et de la fenêtre de deuxième page, et une aire de la fenêtre de première page.

8. Le dispositif électronique (80) selon la revendication 7, comprenant en outre : un module d'obtention (84) et un module de détermination (85), dans lequel
le module d'obtention (84) est configuré pour obtenir, avant que le module de déplacement (83) déplace l'icône de la fenêtre de première page vers la fenêtre de deuxième page, une aire d'une région dans laquelle la fenêtre de première page chevauche la fenêtre de deuxième page, dans le cas où la fenêtre de première page chevauche la fenêtre de deuxième page ;
le module de détermination (85) est configuré pour déterminer une première icône à déplacer dans la première fenêtre de page en fonction de l'aire d'une région de chevauchement obtenue par le module d'obtention ;
et
le module de déplacement (83) est spécifiquement configuré pour déplacer la première icône à déplacer déterminée par le module de détermination vers la fenêtre de deuxième page.

9. Le dispositif électronique selon la revendication 8, dans lequel le module de détermination (85) est spécifiquement configuré pour : déterminer une première icône cible dans la fenêtre de première page comme la première icône à déplacer si un rapport cible est supérieur ou égal à un premier seuil prédéfini, dans lequel le rapport cible est un rapport de l'aire de la région de chevauchement à une aire de la fenêtre de première page ; ou
déterminer une deuxième icône cible dans la fenêtre de première page comme la première icône à déplacer si le rapport cible est supérieur à un deuxième seuil prédéfini et inférieur à un premier seuil prédéfini ; ou déterminer une troisième icône cible dans la fenêtre de première page comme la première icône à déplacer si le rapport cible est inférieur ou égal à un deuxième seuil prédéfini.

10. Le dispositif électronique selon la revendication 7, dans lequel le module de réception (81) est en outre configuré pour recevoir une troisième entrée avant de recevoir la deuxième entrée ;
le dispositif électronique comprend en outre un module de détermination (85) ;
le module de détermination (85) est configuré pour déterminer une deuxième icône à déplacer dans la fenêtre de page cible en réponse à la troisième entrée reçue par le module de réception (81) ;
le module d'affichage (82) est en outre configuré pour afficher, avant que le module de déplacement (83) déplace l'icône dans la fenêtre de page cible, des informations d'invite dans le cas où la fenêtre de première page chevauche la fenêtre de deuxième page, dans lequel les informations d'invite sont utilisées pour indiquer au moins une région de déplacement correspondant à la deuxième icône à déplacer, et l'au moins une région de déplacement est une région dans la fenêtre de deuxième page ;
le module de réception (81) est en outre configuré pour recevoir une quatrième entrée, dans lequel la quatrième entrée est une entrée pour une région cible dans l'au moins une région de déplacement ; et
le module de déplacement (83) est spécifiquement configuré pour déplacer la deuxième icône à déplacer vers la région cible en réponse à la quatrième entrée reçue par le module de réception.

11. Le dispositif électronique (80) selon la revendication 10, dans lequel la région cible est une autre région dans la fenêtre de deuxième page à l'exception d'une région dans laquelle une icône affichée est située ;
ou
la région cible est une région dans une interface d'au moins un dossier dans la fenêtre de deuxième page ;
dans lequel le dispositif électronique (80) comprend en outre un module de création (86), dans lequel le module de création (86) est configuré pour créer l'au moins un dossier dans la fenêtre de deuxième page avant que le module de déplacement (83) déplace la deuxième icône à déplacer vers la région cible.

12. Le dispositif électronique (80) selon la revendication 7, dans lequel le module de réception (81) est en outre configuré pour recevoir une cinquième entrée après que le module de déplacement déplace l'icône dans la fenêtre de page cible ; et
le dispositif électronique (80) comprend en outre un module de traitement (87), dans lequel le module de traitement (87) est configuré pour annuler le déplacement de l'icône dans la fenêtre de page cible en réponse à la cinquième entrée reçue par le module de réception (81).

13. Un support de stockage lisible par ordinateur stockant un programme informatique, et lorsque le programme informatique est exécuté par un processeur, les étapes du procédé de déplacement d'icône selon l'une quelconque des revendications 1 à 6 sont mises en œuvre.
